# EUROPEAN PATENT APPLICATION

(11) **EP 4 761 086 A1**
(43) Date of publication of application: **17.06.2026**
(21) Application number: 24852348.2
(22) Date of filing: 07.08.2024
(51) Int. Cl.: H02M 3/00, H02M 3/335, H01G 4/30

(54) **POWER CONVERSION DEVICE**

(30) Priority: 07.08.2023 KR 20230103178; 01.08.2024 KR 20240102478
(71) Applicant: LG INNOTEK CO. LTD, Gangseo-gu Seoul 07796 (KR)
(72) Inventor: LEE, Seung Min, Seoul 07796 (KR); JUNG, Kwang Soon, Seoul 07796 (KR)
(74) Representative: Plasseraud IP
(86) International application number: PCT/KR2024/011741
(87) International publication number: WO 2025/033995

(57) **Abstract**

A power conversion device, according to one embodiment of the present invention, comprises: a substrate; and a plurality of capacitors disposed on the substrate, wherein a difference between the lengths of current paths connected to the plurality of capacitors is within a predetermined range.

## Description

### [Technical Fields]

The teachings in accordance with exemplary and nonlimiting embodiments of the present invention relate generally to a power conversion device, and more particularly, to a power conversion device that prevents the concentration of current stress in capacitors.

### [Background of Arts]

Rapid chargers for electric vehicles support high-speed charging of several hundred kilowatts by configuring power modules with capacities of tens of kilowatts in parallel, thereby outputting large-capacity power. When connected to an electric vehicle, the power module receives AC power from the grid and outputs DC power to charge the vehicle's battery.

When power conversion within the power module incorporates a resonant circuit, and if the current flow paths differ between the multiple capacitors constituting the resonant capacitor, current stress may concentrate on specific capacitors, potentially causing damage. To ensure stable power conversion, technology is required that can prevent the concentration of current stress on capacitors.

### [Summary of Invention]

### [Technical Subject]

The technical subject to be addressed by the present invention is to provide a power conversion device that prevents the concentration of current stress in capacitors.

### [Technical Solution]

To solve the technical subject, a power conversion device, according to one embodiment of the present invention, may comprise: a substrate; and a plurality of capacitors disposed on the substrate, wherein a difference between the lengths of current paths connected to the plurality of capacitors is within a predetermined range.

Preferably, but not necessarily, the length of the current path connected to each of the plurality of capacitors may be equal.

Preferably, but not necessarily, the length of the current path may be the sum of the length of the current path connected to an input terminal and the length of the current path connected to an output terminal.

Preferably, but not necessarily, each of the plurality of capacitors may be connected to the input terminal and the output terminal via a pattern.

Preferably, but not necessarily, each of the plurality of capacitors may have the sum of the lengths of the patterns connected to the input terminal and the lengths of the patterns connected to the output terminal being equal.

Preferably, but not necessarily, the plurality of capacitors may be disposed in series, and the input terminal may have the shortest current path to a first capacitor positioned on one side among the plurality of capacitors disposed in series, whereas the output terminal may have the shortest current path to a second capacitor positioned on the opposite side of the serially-disposed multiple capacitors.

Preferably, but not necessarily, an imaginary line connecting the input terminal and the output terminal may pass through the center of the entire area where the plurality of capacitors is disposed.

Preferably, but not necessarily, the plurality of capacitors may be capacitors whose capacitance value change with temperature is 500 ppm/K or less.

Preferably, but not necessarily, the plurality of capacitors may be capacitors whose capacitance value changes by 5% or less in response to a bias voltage.

Preferably, but not necessarily, the plurality of capacitors may be connected in parallel or in series-parallel.

Preferably, but not necessarily, the power conversion device may include a resonant LLC converter.

Preferably, but not necessarily, the capacitor may be a resonant capacitor of the resonant LLC converter.

### [Advantageous Effects]

According to embodiments of the present invention, using MLCCs instead of film capacitors enables a more compact resonant capacitor design and reduced losses compared to using film capacitors. Furthermore, the capacitance variation with voltage and temperature is minimal, facilitating the attainment of a uniform LLC converter gain curve. Moreover, it prevents the failure of specific MLCCs due to concentrated current stress.

### [Brief Description of Drawings]

FIG. 1 illustrates a power conversion device according to an embodiment of the present invention.
FIG. 2 is a block diagram of the power conversion device according to an embodiment of the present invention.
FIG. 3 is a circuit diagram of the power conversion device according to an embodiment of the present invention.
FIG. 4 is a diagram illustrating the connection relationship of capacitors in a power conversion device according to a comparative example of the present invention.
FIGS. 5 to 16 are illustrations for explaining various connection states of the capacitor in the power conversion device according to an embodiment of the present invention.
FIG. 17 is an illustration for explaining the connection state of the capacitor in the power conversion device according to a comparative example of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

Furthermore, the terms used in the embodiments of the present invention are intended to explain the embodiments and are not intended to limit the invention.

In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

Furthermore, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or disposed 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

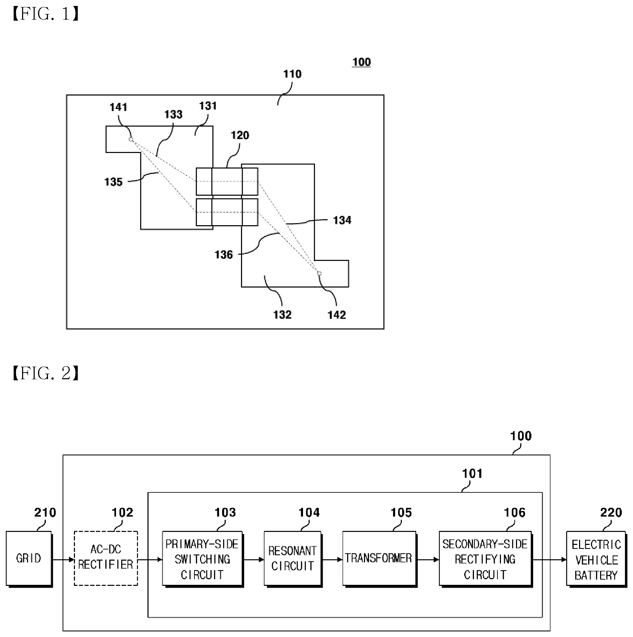

FIG. 1 illustrates a power conversion device according to an embodiment of the present invention. The power conversion device (100) according to an embodiment of the present invention may comprise a substrate (110) and a capacitor (120), and may include a resonant LLC converter (101), an AC-DC rectifier (102), a primary-side switching circuit (103), a resonant circuit (104), a transformer (105), and a secondary-side rectifier circuit (106). The substrate (110) may be a printed circuit board (PCB) formed in a plate shape. The substrate may be a dielectric substrate and may be formed with one or more layers. The power conversion device (100) according to an embodiment of the present invention may comprise a housing and a cover covering the housing, and the substrate (110) may be disposed within a space inside the housing.

The power conversion device (100) according to an embodiment of the present invention may be a power conversion device for an electric vehicle charging device. Here, the power conversion device (100) may be a power module for the electric vehicle charging device. The power module can receive an AC power input from the grid (50/60Hz) and convert it into DC power for charging the electric vehicle battery, then output it. The power module may include an AC-DC rectifier and an isolated DC-DC converter. The power conversion device (100) according to an embodiment of the present invention may include an isolated DC-DC converter, and among isolated DC-DC converters, it may include a resonant LLC converter.

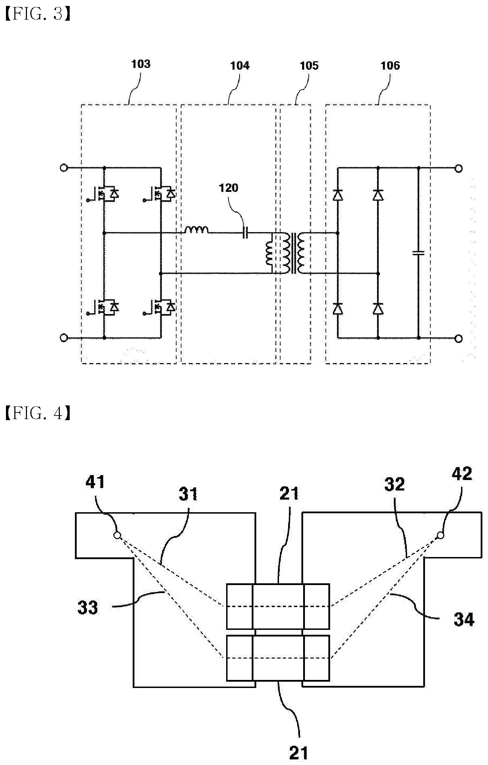

The power conversion device (100) according to an embodiment of the present invention may comprise a primary-side switching circuit (103), a resonant circuit (104), a transformer (105), a secondary-side rectifier circuit (106), and may further comprise an AC-DC rectifier (102). As shown in FIG. 2, the power conversion device (100) may include a resonant LLC converter (101) and may further include an AC-DC rectifier (102). The AC power input from the grid (210) is converted to DC power in the AC-DC rectifier (102) and may be converted into power for charging the electric vehicle battery (220) in the resonant LLC converter (101) and output. The resonant LLC converter (101) may comprise a primary-side switching circuit (103), a resonant circuit (104), a transformer (105), and a secondary-side rectifier circuit (106), and may be implemented as a circuit as shown in FIG. 3. The primary-side switching circuit (103) inputs the received power to the primary side of the transformer. The power input via the primary-side switching circuit (103) is then output to the electric vehicle battery (220) via the transformer (105) and the secondary-side rectifier circuit (106). During operation of the primary-side switching circuit (103), zero-switching is achievable using the resonant frequency implemented in the resonant circuit (104), thereby reducing switching losses and enhancing efficiency. The resonant circuit (104) utilizes a resonant capacitor (120), a resonant inductor, and the magnetizing inductance contained within the transformer, and this configuration is termed a resonant LLC converter (101).

The resonant LLC converter (101) varies its gain to control the output voltage or output current, and controls the switching frequency of the switching device included in the primary-side switching circuit (103) as a means of varying the gain. The gain curve of the resonant LLC converter (101) is influenced by the resonant capacitor; consequently, using capacitors capable of maintaining consistent capacitance across varying environments facilitates the attainment of a more uniform gain curve characteristic.

Capacitors exist in various types, including electrolytic capacitors, film capacitors, tantalum capacitors, and MLCCs. Given that resonant LLC converters are typically designed for switching frequencies ranging from tens of kHz to hundreds of kHz, film capacitors, which can maintain capacitance at high frequencies, can be utilized as the resonant capacitor.

However, film capacitors exhibit relatively significant capacitance variation with operating temperature, potentially causing changes in the LLC converter's gain curve due to temperature deviations. Therefore, the power conversion device (100) according to an embodiment of the present invention may utilize a C0G type MLCC (Multi-Layer Ceramic Capacitor) as the capacitor to reduce capacitance deviation in the resonant capacitor. Using MLCCs enables a spatially compact resonant capacitor design compared to film capacitors and offers advantages in loss reduction due to their low ESR (Equivalent Series Resistance).

The capacitor (120) may be disposed on the substrate (110). Components for power conversion are disposed on the substrate (110), and the components disposed on the substrate (110) may include the capacitor (120). Here, the capacitor (120) may be the resonant capacitor of the resonant circuit (104). Alternatively, it may be another capacitor included within the power conversion device (100).

The capacitor (120) may be a capacitor whose capacitance value change with temperature is 500 ppm/K or less, and whose capacitance value change with bias voltage is 5% or less. The resonant capacitor (120), as described earlier, may include MLCCs, which are capacitors exhibiting minimal capacitance variation. For example, the capacitor (120) may include a C0G type MLCC belonging to Class 1. Ceramic capacitors are categorized into Class 1 and Class 2. Capacitors belonging to Class 1 are high-reliability and high-stability capacitors, such as C0G and U2J type capacitors. Class 2 comprises capacitors offering high efficiency in a compact volume, such as X7R and X5R capacitors. Class 3 includes types such as Y5V. The terminology for each Class 1 type sequentially denotes the temperature coefficient, the temperature coefficient multiplier, and the temperature coefficient tolerance. For example, C0G indicates a temperature coefficient of 0, a temperature coefficient multiplier of -1, and a temperature coefficient tolerance of ±30 ppm/K. That is, C0G signifies a capacitor exhibiting minimal capacitance variation with temperature.

Furthermore, C0G type capacitors exhibit minimal capacitance variation with DC voltage. Conversely, the terminology for each type in Class 2 denotes the capacitance change at low temperature, high temperature, and temperature deviation, respectively. For example, X7R denotes a temperature range of -55 to 125 °C and a temperature deviation of ±15%. For instance, the C0G type maintains a constant capacitance value from 0 to 1000 V, whereas the X7R type may be 10 µF at 0 V but only 3 µF at 1000 V.

C0G type MLCCs exhibit minimal capacitance variation with temperature and DC bias voltage, thereby satisfying the requirements for capacitors with a temperature coefficient of capacitance (TCC) of 500 ppm/K or less and a bias voltage coefficient of capacitance (BCC) of 5% or less.

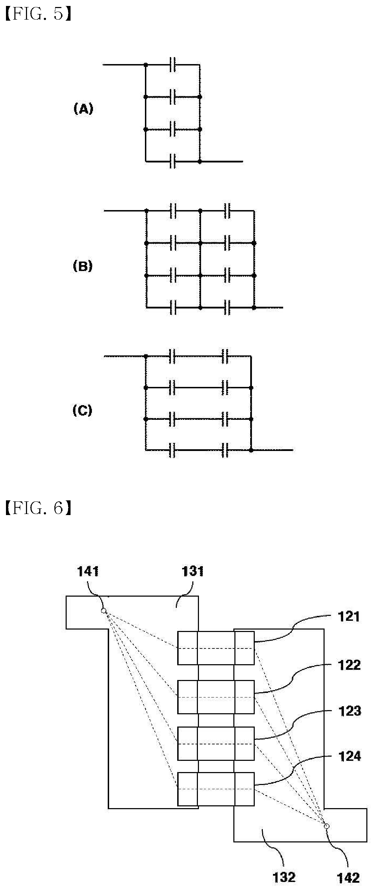

Multiple capacitors (120) may be utilized, wherein said multiple capacitors may be connected in series, in parallel, or in series-parallel. The difference in the length of the current path connected to each of the multiple capacitors connected in parallel or series-parallel may fall within a predetermined range. The length of the current path connected to each capacitor may be equal, and even if the length of the current path connecting the multiple capacitors is not equal, the difference in the length of the current path may be within a preset threshold. Multiple capacitors (120) may be utilized to achieve the capacitance and permissible current to be implemented by the capacitor (120). The multiple capacitors (120) may be connected in parallel or in series-parallel. For example, as shown in FIG. 5(A), all capacitors may be connected in parallel; as shown in FIG. 5(B), capacitors may be connected in series-parallel; or as shown in FIG. 5(C), they may be grouped into two or more sets connected in series, with the sets themselves connected in parallel.

When multiple capacitors (120) are connected in parallel or series-parallel configurations, current imbalance between capacitors may cause current stress to concentrate on certain capacitors, potentially leading to their failure. For example, if the current path to a specific capacitor is shorter, a greater current may flow through that capacitor compared to others, potentially subjecting it to current stress. Therefore, the capacitors (120) on the substrate (110) may be disposed such that the length of the current path flowing therethrough is equal, or such that the difference in the length of the current paths is within a pre-set threshold.

The threshold is set to a value that allows the capacitor to operate normally, based on the capacitor experiencing the highest current stress due to the difference in current path length. This value may vary depending on the capacitor's specifications and the magnitude of the flowing current, and may be derived through simulation or set by the user.

The length of the current path may be the sum of the length of the current path connected to the input terminal (141) and the length of the current path connected to the output terminal (142). Each of the plural capacitors may be connected to the input terminal and the output terminal by a pattern. The current paths connected by the pattern may be formed by patterning on the substrate (110). Each capacitor (120) may be such that the sum of a length of the pattern connected to the input terminal (141) and a length of the pattern connected to the output terminal (142) is equal, or whose difference is within a predetermined range.

To implement this, the plural capacitors (120) are disposed in a row. The current path connecting to the first capacitor (121), which is located on one side of the plural capacitors (120) disposed in a row, is the shortest. where the output terminal (142) may be disposed such that the current path connecting to a second capacitor (124), positioned on the opposite side of the multiple capacitors disposed in a row, is the shortest.

As shown in FIG, 6 corresponding to FIG. 5(A), the sum of lengths of the entire path extending from the input terminal (141)-current path-the first capacitor (121)-current path-output terminal (142) may be disposed and connected such that it equals the total length of the entire path extending from the input terminal (141)-current path-the second capacitor (124)-current path-the output terminal (142). Furthermore, the total path lengths of the third capacitor (122) and fourth capacitor (123), positioned centrally among the multiple capacitors, may also be arranged to be equal.

In contrast, as shown in FIG. 4, the sum of the lengths of the entire paths from the input terminal (41) - current path (31) -upper capacitor (21)-current path (32)-output terminal (42) may be shorter than the sum of the lengths of the entire path from the input terminal (41)-current path (33)-lower capacitor (22)-current path (34)-output terminal (42). in which case, the current flowing through the upper capacitor (21) may be greater than the current flowing through the lower capacitor (22). Consequently, current stress may be applied to the upper capacitor (21), potentially risking damage to the upper capacitor (21).

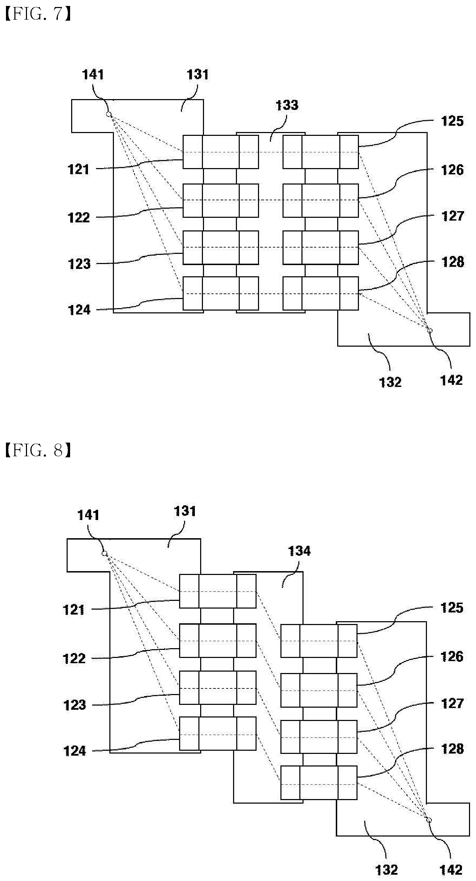

The series-parallel connection relationship of FIG. 5(B) may be implemented as shown in FIG. 7 or FIG. 8. The series-parallel connection relationship of FIG.5 (B) may be implemented through a conductive pattern (131) connecting the input terminal (141) and the first capacitor (121), a conductive pattern (132) connecting the output terminal (142) and the first-1 capacitor (125), and a conductive pattern (133) connecting the first capacitor (121) and the first-1 capacitor (125). The central conductive pattern (133) may be connected to all capacitors (121 to 128).

Furthermore, as shown in FIG. 8, depending on the relative position between the input terminal (141) and the output terminal (142), the central conductive pattern (134) can be formed long, and capacitors connected via the central conductive pattern (134) can be disposed so that their positions are offset. This enables efficient connection between the input terminal (141)-capacitor (120)-output terminal (142) even in the case of FIG. 8, where the relative position between the input terminal (141) and output terminal (142) is more distant than in FIG. 7.

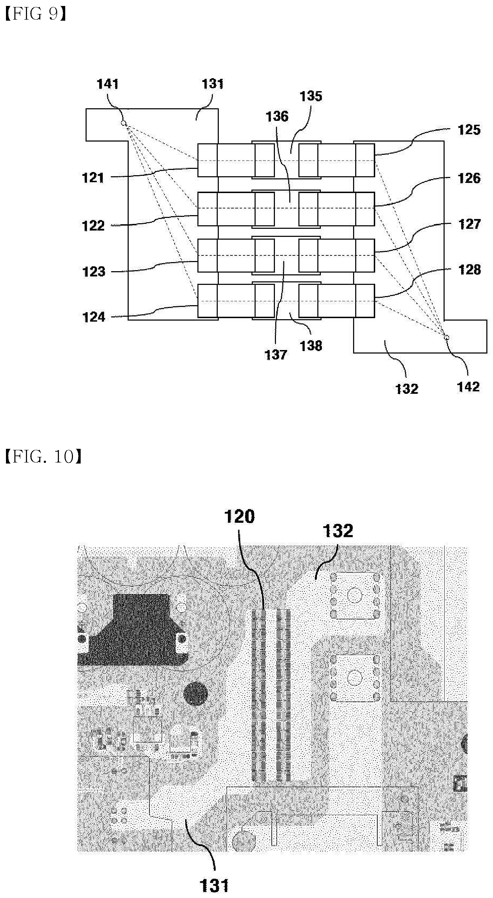

The series-parallel connection relationship of FIG. 5(C) may be implemented as shown in FIG. 9. The conductive pattern (131) connecting the input terminal (141) and the first capacitor (121), and the conductive pattern (132) connecting the output terminal (142) and the first-1 capacitor (125) correspond to the configuration of FIG. 7. However, the conductive pattern (135) connecting the first capacitor (121) and the first-1 capacitor (125) connects only the first capacitor (121) and the first-1 capacitor (125), and is not connected to other capacitors. thereby enabling the series connection of the first capacitor (121) and the first-1 capacitor (125). That is, the central conductive patterns (135 to 138) may not be interconnected.

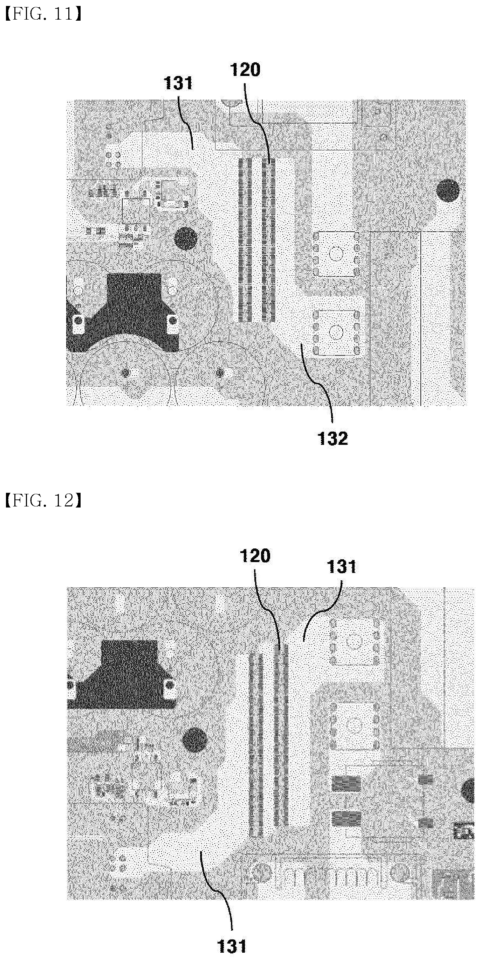

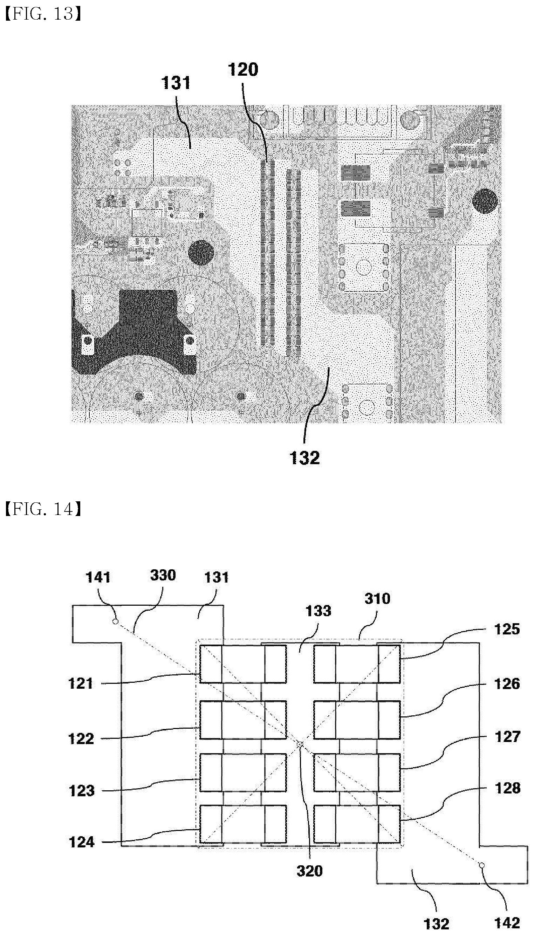

Multiple capacitors (120) connected by conductive patterns on the substrate (110) may be implemented in various design approaches, as shown in FIGS. 10 to 13. Even if the relative positions of the input terminal and output terminal differ vertically, as in FIGS. 10 and 11, a current path can be readily formed via the conductive patterns. Furthermore, even if the relative positions of the input terminal and output terminal are more distant, as in FIGS. 12 and 13, an efficient current path can be formed by staggered arrangement between capacitors connected in series.

The relative arrangement and connection relationship between the input terminal (141), output terminal (142), and a plurality of capacitors (120) of the power conversion device (100) according to an embodiment of the present invention may be such that an imaginary line connecting the input terminal (141) and the output terminal (142) passes through the center of the entire area where the input terminal (141), output terminal and a plurality of capacitors (120) are arranged and connected.

As shown in FIG. 14, the input terminal (141), the output terminal (142) and the plurality of capacitors (121-128) may be disposed and connected to allow the imaginary line (330) connecting the input terminal (141) and the output terminal (142) to pass through the center (320) of entire area (310) where the plurality of capacitors (121-128) is disposed. This enables the length of the entire current path connected to each capacitor to be equal or to be realized with a difference within a threshold value.

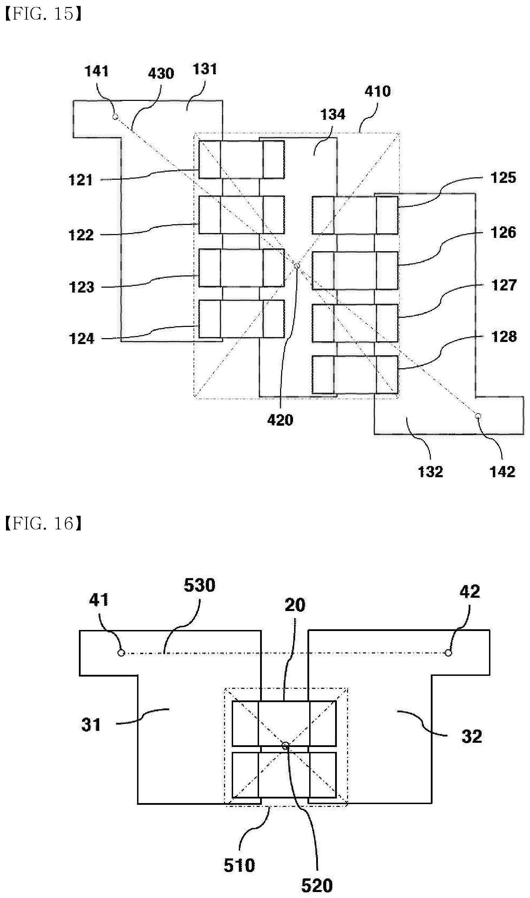

As shown in FIG. 15, even when the positions of capacitors connected to one another are misaligned, the input terminal (141), the output terminal (142) and the plurality of capacitors (121-128) may be disposed and connected to allow the imaginary line (430) connecting the input terminal (141) and the output terminal (142) to pass through the center (420) of the entire area (410) disposed with the plurality of capacitors (121-128).

The entire area (410) where the plural capacitors (121 to 128) are disposed may determine the first direction outermost corner and the first direction outermost corner, thereby setting and disposing a rectangular-shaped area thus formed as the entire area (410). Through this, the length of the entire current path connected to each capacitor can be made equal or with a difference within a critical value.

In the arrangement according to FIG. 4, as shown in FIG. 16, it can be observed that the imaginary line (530) connecting the input terminal (41) and the output terminal (42) does not pass through the center (520) of the entire area (510) where multiple capacitors (20) are arranged. In this case, it can be seen that the total current path lengths between capacitors differ.

As described above, the power conversion device (100) according to an embodiment of the present invention enables a resonant capacitor design and loss reduction compared to using film capacitors, by employing MLCCs instead of film capacitors. It also exhibits smaller capacitance variation with voltage and temperature, facilitating the attainment of a uniform LLC converter gain curve, and prevents damage caused by current stress concentrating on specific capacitors.

A person skilled in the art relating to the present embodiments will understand that the disclosed methods may be implemented in modified forms without departing from the essential characteristics of the above-described embodiments. Therefore, the disclosed methods should be considered from an illustrative perspective rather than a restrictive one. The scope of the present invention is defined not by the foregoing description but by the appended claims, and all differences within the scope of the claims shall be interpreted as falling within the scope of the present invention.

## Claims

1. A power conversion device, comprising:
a substrate; and
a plurality of capacitors disposed on the substrate,
wherein a difference between lengths of current paths connected to each of the plurality of capacitors, is within a predetermined range.

2. The power conversion device of claim 1, wherein the length of the current path connected to each of the plurality of capacitors is equal.

3. The power conversion device of claim 1, wherein the length of the current path is a sum of a length of a current path connected to an input terminal and a length of a current path connected to an output terminal.

4. The power conversion device of claim 3, wherein each of the plurality of capacitors is connected to the input terminal and the output terminal via a pattern.

5. The power conversion device of claim 3, wherein, for each of the plurality of capacitors, a sum of a length of a pattern connected to the input terminal and a length of a pattern connected to the output terminal is equal.

6. The power conversion device of claim 3, wherein the plurality of capacitors is disposed in series,
wherein the input terminal has a shortest current path to a first capacitor positioned on one side of the plurality of capacitors disposed in series,
wherein the output terminal has a shortest current path to a second capacitor positioned on an opposite side of the plurality of capacitors disposed in series.

7. The power conversion device of claim 3, wherein an imaginary line connecting the input terminal and the output terminal passes through a center of entire area where the plurality of capacitors is disposed.

8. The power conversion device of claim 1, wherein the plurality of capacitors is capacitors whose capacitance value change according to temperature is 500 ppm/K or less.

9. The power conversion device of claim 1, wherein the plurality of capacitors is capacitors whose capacitance value changes according to bias voltage is 5% or less.

10. The power conversion device of claim 1, wherein the plurality of capacitors is connected in parallel or in series-parallel.
